# EUROPEAN PATENT APPLICATION

(11) **EP 4 700 431 A1**
(43) Date of publication of application: **25.02.2026**
(21) Application number: 24199129.8
(22) Date of filing: 09.09.2024
(51) Int. Cl.: G01S 7/52, G01S 15/89

(54) **ULTRASOUND SYSTEM**

(30) Priority: 22.08.2024 US 202463685733 P
(71) Applicant: Koninklijke Philips N.V., 5656 AG Eindhoven (NL)
(72) Inventor: SAMPSON, Richard Anthony, Eindhoven (NL); MCMIILLAN, Michael Thomas, Eindhoven (NL)
(74) Representative: Philips Intellectual Property & Standards

(57) **Abstract**

The invention relates to a hybrid ultrasound system. The ultrasound system comprises a probe (110) with a probe analog-to-digital converter (115) and a probe digital beamformer (116). The ultrasound system further comprises a host (130) with a host analog-to-digital converter (135) and a host digital beamformer (136). The ultrasound system further comprises a cable (120) connecting the probe to the host. The ultrasound system is configured to: transmit (121) analog signals from the array of transducer elements via the cable to the host analog-to-digital converter; and transmit (122) digital signals from the probe digital beamformer via the cable to the host. The host of the ultrasound system is configured to combine signals from the probe digital beamformer and signals from the host digital beamformer.

## Description

### FIELD OF THE INVENTION

The invention relates to an ultrasound system. More particularly to digital ultrasound systems.

### BACKGROUND OF THE INVENTION

Ultrasound imaging is one of the most common medical imaging techniques. In particular, ultrasound imaging is considered to be comparatively cheap (when compared to CT and X-ray) and comparatively safe (e.g., no harmful radiation). It is thus no surprise that many different ultrasound systems and probes exist to image different body parts. For example, ultrasound probes for external imaging have been developed, including but not limited to curvilinear probes for abdominal imaging, linear probes for vascular and musculoskeletal imaging, and sector probes for cardiac imaging. Additionally, probes have been developed for internal imaging, such as transvaginal probes for gynecological exams and early pregnancy assessments, transrectal probes for prostate exams, and transesophageal echocardiography (TEE) probes for detailed cardiac imaging via the esophagus. Transthoracic echocardiography (TTE) probes are also used externally to assess cardiac function. Moreover, intravenous ultrasound (IVUS) probes allow for the detailed examination of blood vessels from the inside, providing critical information for vascular diagnostics and interventions. While these ultrasound probes differ considerably in design, their working principle and electronic configuration is in general quite similar.

Digital ultrasound systems nowadays typically comprise analog front-ends for signal transmission and the initial stages of signal reception. This is followed by digital signal processing to combine and analyze the received data. There is, however, significant variation in how the signal processing tasks are distributed between the probe and the host of the ultrasound system.

On the one hand, all the digital signal processing may be performed within the host, allowing for simpler and potentially lighter probes. However, this setup can lead to challenges with cable size and data lane count. The cables connecting the probe to the host must carry raw analog signals, which necessitates a large number of data lanes to maintain signal integrity and quality. This can result in bulky cables that are less ergonomic, for example, cumbersome to handle and may limit the probe's maneuverability and ease of use.

On the other hand, performing all the digital signal processing within the probe itself can significantly reduce the complexity and size of the cable, as only processed digital signals need to be transmitted to the host. However, integrating all the necessary processing electronics within the probe poses significant thermal and power management challenges. The probe must be capable of dissipating heat generated by the processing components to prevent overheating, and it must be designed to operate within the limited power available while maintaining performance and reliability. While thermal management approaches including active cooling have been proposed to overcome some of these issues, their implementation typically comprises transporting a coolant through the cable, yielding yet again bulky cables that are less ergonomic, for example, cumbersome to handle and may limit the probe's maneuverability and ease of use.

There is thus a need for improved ultrasound systems.

### SUMMARY OF THE INVENTION

It is, inter alia, an object of the invention to provide an improved ultrasound system that better manages the power and thermal budgets of the ultrasound probe without adversely affecting cable ergonomics. According to the invention, this is achieved by a unique division of the digital processing, wherein part of the digital processing takes place within the host, and part of the digital processing takes place within the probe. In this way, two parallel data processing routes are engaged, wherein the first route comprises digitizing and digitally beamforming a first part of analog ultrasound signals within the probe and then transmitting the digitally beamformed data to the host, and wherein the second route comprises transmitting a second part of the analog ultrasound signals towards the host and digitizing and digitally beamforming the second part of the analog ultrasound signals within the host. This novel arrangement, wherein only part of the digital processing takes place in the probe allows to improve power and thermal management of the probe, while at the same time enabling a reduction of cable data transfer requirements. In an example according to this invention, an ultrasound system comprising X data lanes in the cable connecting the probe to the host, may now fictitiously process data as if it comprised X+Y data lanes, since Y data lanes may be processed within the probe. In other words, when implementing this invention, the cable data lane count may be reduced (improving cable ergonomics) without a reduction of image resolution, signal-to-noise ratio, frame rate, depth penetration, field of view, etc. or alternatively image resolution, signal-to-noise ratio, frame rate, depth penetration, field of view, etc. may be improved without adversely affecting the ergonomics by not needing to increase the cable data lane count.

The invention is defined by the independent claims. Advantageous embodiments are defined in the dependent claims.

According to an aspect of the invention there is provided an ultrasound system comprising:
- a probe comprising:
   - an array of transducer elements, the array of transducer elements for example being configured to generate sound waves to emit into a subject and receive reflected soundwaves from the subject, and to generate ultrasound signals responsive to receiving the reflected sound waves;
   - a probe analog-to-digital converter connected to the array of transducer elements, the probe analog-to-digital converter for example configured to convert analog ultrasound signals generated by a first part of the ultrasound transducer array to digital ultrasound signals; and
   - a probe digital beamformer connected to the probe analog-to-digital converter, the probe digital beamformer for example configured to digitally beamform the digital ultrasound signals received from the probe analog-to-digital converter, in other words, to for example apply the delay and sum algorithm;
- a host comprising:
   - a host analog-to-digital converter, the host analog-to-digital converter for example configured to convert analog ultrasound signals generated by a second part of the ultrasound transducer array to digital ultrasound signals; and
   - a host digital beamformer connected to the host analog-to-digital converter, the host digital beamformer for example configured to digitally beamform the digital ultrasound signals received from the host analog-to-digital converter, in other words, to for example apply the delay and sum algorithm; and
- a cable connecting the probe to the host;
   wherein the ultrasound system is configured to:
      transmit analog signals from the array of transducer elements via the cable to the host analog-to-digital converter, and
      transmit digital signals from the probe digital beamformer via the cable to the host, and
   wherein the host is configured to combine signals from the probe digital beamformer and signals from the host digital beamformer, for example, by summing the delayed and summed signals from the probe digital beamformer with the delayed and summed signals from the host digital beamformer.

In this manner, an ultrasound system may increase the amount of active transducer elements for receiving reflected echoes without requiring bulky cables, while maintaining power and thermal budgets of the probe, and potentially, without requiring changes to existing ultrasound hosts. Thereby, for example, image quality, depth penetration, etc., may be improved.

In an example, the host further comprises a summing node configured to combine signals from the probe digital beamformer and signals from the host digital beamformer. For example, the summing node may sum the summed signals from the delay and sum algorithm of the probe digital beamformer with the summed signals from the delay and sum algorithm of the host digital beamformer.

In an example, the probe further comprises a multiplexer connected to the array of transducer elements. The multiplexer may for example be configured to route analog ultrasound signals from the transducer array to either the analog path or the digital path, wherein the analog path comprises transmission via the cable to the host and wherein the host processes said signals, and wherein the digital path comprises in-probe processing. Processing as expressed here may comprise digitizing and beamforming the analog ultrasound signals.

In an example, the probe further comprises:
- an amplifier connected between the array of transducer elements and the probe analog-to-digital converter; and

- the host further comprises:
   - an amplifier connected to the host analog-to-digital converter and inserted in a transmit path of the analog signals from the array of transducer elements to the host analog-to-digital converter.

In an example, the probe comprises Y analog data lanes connecting the array of transducer elements to the probe analog-to-digital converter;
wherein the system comprises X analog data lanes connecting the array of transducer elements to the host analog-to-digital converter; and
wherein X and Y are integers greater than zero.

In other words, the Y analog data lanes comprise the digital data lanes inside the ultrasound probe, i.e., the lanes in which the analog ultrasound signals are digitized by the probe analog-to-digital converter and digitally beamformed by the probe digital beamformer, and the X data lanes comprise the analog data lanes inside the probe which transmit the analog ultrasound signals to the host via the cable. The analog lanes are then processed inside the host, i.e., the analog lanes comprise signals which are digitized by the host analog-to-digital converter and digitally beamformed by the host digital beamformer

In n example, the cable comprises X analog data lanes and Z digital data lanes, and wherein the Z digital data lanes are configured to transmit digitized and digitally beamformed data from the Y analog data lanes from the probe to the host, wherein Z is an integer greater than zero.

In an example, the probe further comprises:
- a probe transmit/receive switch inserted between the array of transducer element and the probe analog-to-digital converter; and
- a probe analog transmitter connected to the transmit/receive switch; and

- the host further comprises:
   - a host transmit/receive switch inserted in a transmit path of the analog signals from the array of transducer elements to the host analog-to-digital converter; and
   - a host analog transmitter connected to the transmit/receive switch.

The probe analog transmitter may provide high voltage pulses to drive individual elements of the transducer array (i.e., the active elements). The T/R switch ensures the high voltage pulses do not enter the receive circuitry, i.e., the analog-to-digital converters and the digital beamformers. The cable may further be configured to transmit high voltage pulses via the cable from the host analog transmitter to the transducer array.

In this manner, the ultrasound system may also increase the number of active transducer elements in transmit, i.e., the number of elements which emit sound waver. Typically this number is limited by the number of physical wires in the cable. However, according to this example, more active elements may be driven as some may be driven from within the probe directly. Thereby, an improved ultrasound probe, with for example improved penetration may be connected to existent systems and may be operated without necessitating bulky cables.

In an example, the host further comprises:
- a signal processor configured to generate image data based on the digitally beamformed signals;
- a memory; and
- a user interface.

According to an aspect of the invention there is provided an ultrasound probe comprising:
- an array of transducer elements;
- a probe analog-to-digital converter connected to the array of transducer elements; and
- a probe digital beamformer connected to the probe analog-to-digital converter;
wherein the ultrasound probe is configured to
transmit analog signals from the array of transducer elements via a cable to a host, and
transmit digital signals from the probe digital beamformer via the cable to the host.

According to an aspect of the invention there is provided an ultrasound host comprising:
- a host analog-to-digital converter; and
- a host digital beamformer connected to the host analog-to-digital converter;
wherein the host is configured to combine signals from a probe digital beamformer and signals from the host digital beamformer.

According to an aspect of the invention there is provided a method for processing ultrasound signals in an ultrasound system, the method comprising:
- inside an ultrasound probe:
   - generating analog ultrasound signals at an array of transducer elements;
   - digitizing a first part of the analog ultrasound signals; and
   - digitally beamforming the digitized first part of the analog ultrasound signals;
- transmitting to a host the digitally beamformed digitized first part of the analog ultrasound signals;
- transmitting to the host a second part of the analog ultrasound signals; and
- inside the host:
   - digitizing the second part of the analog ultrasound signals;
   - digitally beamforming the digitized second part of the analog ultrasound signals;
   - combining the digitally beamformed digitized first part of the analog ultrasound signals and the digitally beamformed digitized second part of the analog ultrasound signals.

In an example, the method further comprises:
- inside the probe:
   - selecting the first part of the analog ultrasound signals and
   - selecting the second part of the analog ultrasound signals.

In an example, the method further comprises:
- inside the probe:
   - amplifying the first part of the analog ultrasound signals; and

- inside the host:
   - amplifying the second part of the analog ultrasound signals.

In an example, the method further comprises:
- inside de host:
   - generating electrical pulses to control a first subset of elements of the array of transducer elements; and
- inside de probe:
   - generating electrical pulses to control the array of transducer elements.

In an example, the method further comprises:
- inside the host
   - generating an ultrasound image; and
- displaying the ultrasound image.

These and other aspects of the invention will be apparent from and elucidated with reference to the embodiments described hereinafter.

### BRIEF DESCRIPTION OF THE DRAWINGS

Fig. 1 shows an exemplary schematic of a simplified ultrasound system according to an embodiment of the invention.
Fig. 2 shows an example of the delay and sum algorithm according an embodiment of the invention.
Fig. 3 shows an exemplary ultrasound probe according to an embodiment of the invention.
Fig. 4 shows an exemplary ultrasound system according to an embodiment of the invention.
Fig. 5 shows an exemplary ultrasound system according to an embodiment of the invention.
Fig. 6 shows an exemplary ultrasound probe according to an embodiment of the invention.

### DETAILED DESCRIPTION OF EMBODIMENTS

The invention relates to ultrasound systems. In particular to the arrangement of analog-to-digital converters and digital beamformers and signal paths within a digital ultrasound system.

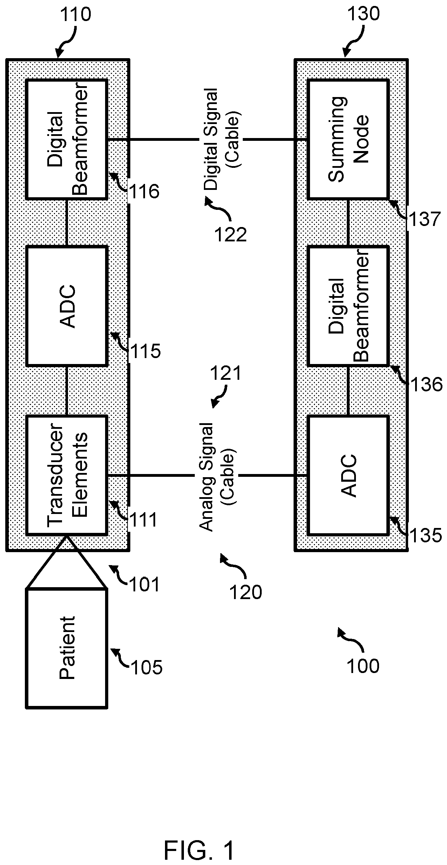

Fig. 1 shows a simplified schematic of an exemplary digital ultrasound system 100 to highlight the invention. The ultrasound system 100 comprises an ultrasound probe 110, a host 130, and a cable 120 connecting the ultrasound probe to the host.

The ultrasound probe 110 comprises an array of transducer elements 111, a probe analog-to-digital converter (ADC) 115, and a probe digital beamformer 116.

The host 130 comprises a host analog-to-digital converter (ADC) 135, a host digital beamformer 136, and a summing node 137. It should be clear from the description herein that the summing node 137 may also be implemented differently. For example, the tasks as performed by the summing node 137 may also be performed by the digital beamformer 136. For example, the functionality of the summing node 137 may be incorporated into a signal processor.

The array of transducer elements 111 may be a single transducer element or a plurality of transducer elements. The array of transducer elements may comprise any number of suitable acoustic elements. For example, the array of transducer elements can include between 1 acoustic element and 10000 acoustic elements, including values such as 2 acoustic elements, 4 acoustic elements, 36 acoustic elements, 64 acoustic elements, 128 acoustic elements, 500 acoustic elements, 812 acoustic elements, 1000 acoustic elements, 3000 acoustic elements, 8000 acoustic elements, and/or other values both larger and smaller. In some instances, the array of transducer elements may include an array of acoustic elements with any number of acoustic elements in any suitable configuration, such as a linear array, a planar array, a curved array, a curvilinear array, a circumferential array, an annular array, a phased array, a matrix array, a one-dimensional (1D) array, a 1.x-dimensional array (e.g., a 1.5D array), or a two-dimensional (2D) array. The array of acoustic elements (e.g., one or more rows, one or more columns, and/or one or more orientations) can be uniformly or independently controlled and activated. The array of transducer elements can be configured to obtain one-dimensional, two-dimensional, and/or three-dimensional images of a patient's anatomy. In some embodiments, the array of transducer elements may include a piezoelectric micromachined ultrasound transducer (PMUT), capacitive micromachined ultrasonic transducer (CMUT), single crystal, lead zirconate titanate (PZT), PZT composite, other suitable transducer types, and/or combinations thereof. The array of transducer elements 111 may further be configured to emit ultrasound echoes 101 towards a subject or patient 105 and receive echoes reflected from the subject or patient 105. Responsive to the received echoes the transducer elements 111 generate analog ultrasound signals.

A first part of the analog ultrasound signals is transmitted from the array of transducer elements 111 to the probe ADC 115. The probe ADC 115 is configured to convert the first part of the analog ultrasound signals to digital ultrasound signals. This process may also be described as digitizing the analog ultrasound signals. The digitized ultrasound signals are then transmitted to the probe digital beamformer 116 which beamforms the digitized ultrasound signals to yield first digitally beamformed ultrasound signals. After beamforming, the first digitally beamformed ultrasound signals are transmitted from the ultrasound probe 110 via the cable 120 (route 122) to the host 130. It should be understood that multiple ADCs may be implemented within the probe. For example, one ADC for each data lane, i.e., each transducer element to have its data digitally beamformed within the probe. In some examples, the digitized beamformed data may further be compressed before transmission using conventional compression algorithms.

A second part of the analog ultrasound signals are transmitted from the array of transducer elements 111 to the host ADC 135 via the cable 120 (route 121). The cable 120 thus transmits both analog and digital signals. The cable 120 may comprise any suitable wired communication link. For example, the cable may comprise a universal serial bus (USB) link or an Ethernet link. The cable may further have any number of data lanes. For example, 2 data lanes, 8 data lanes, 56 data lanes, 128 data lanes, 256 data lanes, 384 data lanes, or any number therebetween or above.

According to the invention there is no overlap between the first and second part of ultrasound signals. In other words, there is no overlap in transducer elements that generate the first part of analog ultrasound signals and transducer elements that generate the second part of analog ultrasound signals.

The host ADC 135 is configured to convert the second part of the analog ultrasound signals to digital ultrasound signals. This process may also be described as digitizing the analog ultrasound signals. The digitized ultrasound signals are then transmitted to the host digital beamformer 136 which beamforms the digitized ultrasound signals to yield second digitally beamformed ultrasound signals. It should be understood that multiple ADCs may be implemented within the host. For example, one ADC for each data lane, i.e., each transducer element to have its data digitally beamformed within the host.

The first digitally beamformed ultrasound signals and second digitally beamformed ultrasound signals are combined in the summing node 137. The summing node 137 essentially sums the first and second digitally beamformed signals to generate the final digitally beamformed ultrasound signal which may be used by a signal processor (not shown in Fig. 1) to generate an image.

The summing node 137 and the probe and host digital beamformers 116, 136 together can be said to execute the Delay-And-Sum (DAS) algorithm, where the digital beamformers respectively delay the signals and the summing node performs the summing of the delayed signals. A difference of this configuration compared to typical implementations of the DAS algorithm is that the delayed signals come from different places, i.e., a first part of delayed, and potentially summed signals is received from the probe, and a second part of the delayed and potentially summed signals is received from the host.

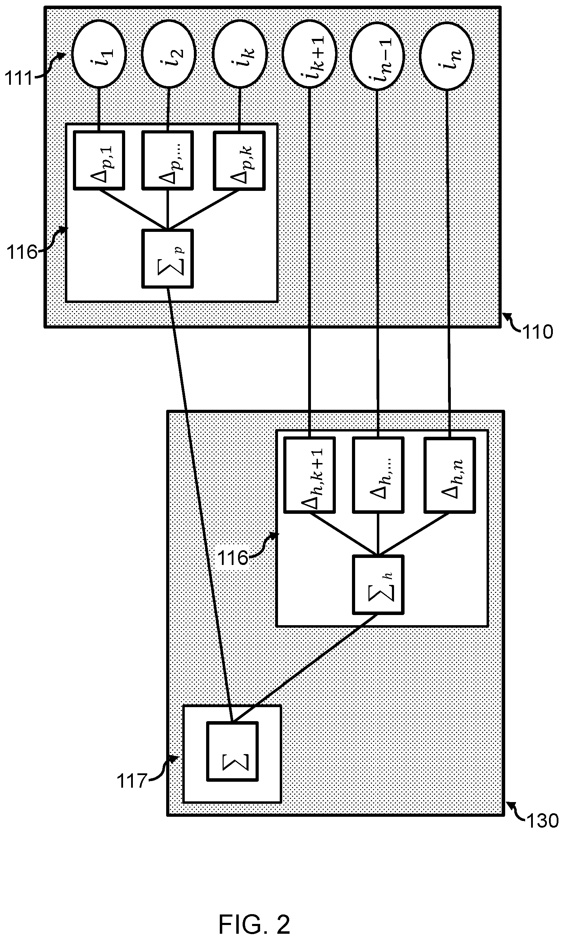

Fig. 2 provides a schematic of a delay and sum algorithm according to a preferred implementation of the invention. Fig. 2 divides the transducer elements111 into elements *i*₁ to *iₙ*. Each transducer element is further connected to a digital beamformer, 116, 136 which applies a time delay Δ to the individual active transducer elements 111 and sums the delayed signals. The time delay Δₚ and sum Σ*ₕ* is applied to transducer elements connected to the probe (subscript p) digital beamformer. The time delay Δₕ and sum Σ*ₕ* is applied to transducer elements connected to the host (subscript h) digital beamformer. The index k indicates the number of transducer elements processed within the probe, i.e., by the probe digital beamformer 116. The index n indicates the total number of active transducer elements, such that *j* = *n* - *k* active transducer elements are processed within the host, i.e., the host digital beamformer 136. The probe digital beamformer 116 is further also configured to sum (Σ*ₚ*) the delayed signals Δ_{*p*,1} to Δ*_{p,k}*. The host digital beamformer 136 is further also configured to sum (Σ*ₕ*) the delayed signals Δ_{*h,k*+1} to Δ*_{h,n}*. The summed probe signals and the summed host signals are then summed together by the summing node 117 (block Σ). In other words, the delay and sum algorithm according to this invention may basically delay and sum the signals of a first subset of transducer elements processed within the probe, and delay and sum the signals of a second subset of transducer elements processed within the host, and finally sum the delayed and summed signals from the probe together with the delayed and summed signals from the host in the summing node 117.

The arrangement of ADCs and digital beamformers as described with reference to Fig. 1 has been found by the inventors to be particularly advantageous in digital ultrasound systems. In particular, digital ultrasound systems struggle balancing the power consumption and resulting heat of ADCs and digital beamformers in the probe or the desire for ergonomic cables from the probe to the host when having ADCs and digital beamformers in the host. The inventors have realized that a hybrid approach for processing the receive signals as described herein may benefit digital ultrasound systems by not requiring digitization and digital beamforming of all the data within the probe, thereby reducing in-probe power consumption and heat generation, and by not requiring digitization and digital beamforming of all the data within the host, thereby reducing the data transmission requirements of the cable connecting the probe with the host. For example, according to the invention, an ultrasound system limited to X data lanes by a cable may be able to operate according to X+Y data lanes, wherein Y data lanes are processed within the probe as described above.

Additionally, the hybrid approach as described herein is entirely backwards compatible and can increase the ultrasound imaging quality of new ultrasound probes without requiring changes to the host. In particular, current hosts typically already comprise some digital data lanes from the probe to the host. In an example, these digital lanes may be from the probe to an FPGA implementing the host digital beamformer and the summing node, such that software changes alone can re-direct the transmission of the digital data lanes from the probe to the summing node. A new ultrasound probe may thus be developed incorporating one or more ADCs and one or more digital beamformers for part of the analog ultrasound signals, thereby increasing the possible aperture of the transducer array without increasing the cable transmission requirements. For example, a conventional ultrasound system limited to X data lanes may now operate on X+Y data lanes, wherein Y data lanes are in a way faked by performing some digital processing inside the probe before transmitting the data to the host. In other words, digital ultrasound probes according to this hybrid approach can steer, drive or control a larger number of active transducer elements in receive mode yielding an improved image quality and/or depth penetration without altering an existent cable nor host system. In fact, the hybrid approach as described may be implemented by only modifying the software of an FPGA carrying the host digital beamformer and summing node.

An ultrasound system according to the herein described hybrid approach may thus enable an already existent host and cable to operate as follows: for example, a cable may have 2 data lanes meaning the data from 2 transducer elements may be transmitted simultaneously. According to the invention, when part of the data is processed in the probe, the data for 2 transducer elements may be processed in the probe and transmitted to the host while occupying only a single data lane, leaving the other data lane to transfer analog signals from a single transducer element to the host. In this way, 3 transducer elements may be active in a hybrid ultrasound system as described herein as compared to 2 active transducer elements in a more conventional ultrasound system.

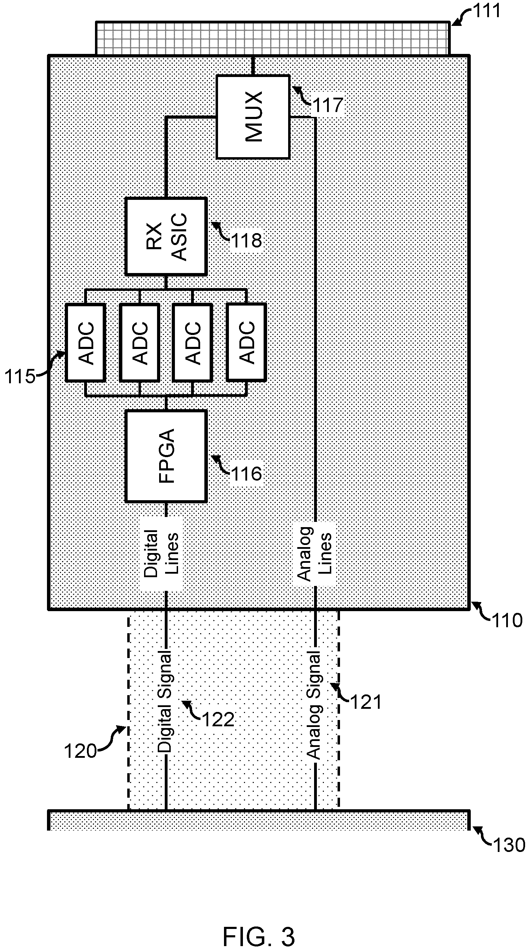

The digital ultrasound system as described herein, wherein digital processing takes place both within the probe and within the ultrasound system may thus also be called a hybrid ultrasound system. This terminology originated as the ultrasound probe will comprise both digital and analog lanes as shown in Fig. 3.

Fig. 3 provides a different schematic of an exemplary ultrasound probe in accordance with an implementation of the invention. In Fig. 3, the signal flow is top-down; if the figure is turned clockwise by 90°, the signal flow is from right to left.

The ultrasound probe of Fig. 3 comprises an array of transducer elements 111, a multiplexer (MUX) 117, a receive (RX) Application Specific Integrated Circuit (ASIC) 118, four ADCs 115, and a Field Programmable Gate Array (FPGA) 116 that incorporates the digital beamformer.

The array of transducer elements 111 is configured to generate analog ultrasound signals in a similar manner as described with respect to transducer elements 111 in Fig. 1.

The MUX 117 is configured to dynamically route the analog ultrasound signals from the array of transducer elements into the digital or analog path. In other words, the MUX allows for a dynamic selection on whether the data from a particular transducer element is processed in the digital processing path or the analog processing path. In this way, it is possible to select a first part of the analog ultrasound signals and a second part of the analog ultrasound signals to be processed as described with reference to Fig. 1. In particular, due to MUX 117, any of the following distributions may be considered:
- 50/50 split (first part/second part), the analog ultrasound signals of a first half of transducer elements are processed in the probe, and the analog ultrasound signals of the remaining (second) half of transducer elements are transmitted in analog form to the host for processing.
- 30/70 split, the analog ultrasound signals of a first 30% of transducer elements are processed in the probe, and the analog ultrasound signals of the remaining 70% of transducer elements are transmitted in analog form to the host for processing.
- 70/30 split, the analog ultrasound signals of a first 70% of transducer elements are processed in the probe, and the analog ultrasound signals of the remaining 30% of transducer elements are transmitted in analog form to the host for processing.
- 1/99 split, the analog ultrasound signals of a first 1% of transducer elements is processed in the probe, and the analog ultrasound signals of the remaining 99% of transducer elements are transmitted in analog form to the host for processing.
- 99/1 split, the analog ultrasound signals of a first 99% of transducer elements are processed in the probe, and the analog ultrasound signals of the remaining 1% of transducer elements are transmitted in analog form to the host for processing.

It should be clear that any split is possible, also including splits between the provided examples. A split of 0/100 would eventually yield a digital ultrasound system wherein all processing is performed in the host. A split of 100/0 would yield a digital ultrasound system wherein all processing is performed in the probe. These two extreme cases are not considered part of the invention. A control of the split may be achieved by an additional controller (not shown) which may control the multiplexer. In an example, the controller is part of the ultrasound probe and is connected to the host via cable 120. In an example, the controller is part of the ultrasound host, and is connected to the multiplexer via cable 120. The controller may determine the split based on an algorithm user input, or based on system requirement.

It is understood that the percentages as indicated above may be percentages of the number of active transducer elements. For example, an array of transducer elements may comprise 1,000 transducer elements, but only 100 may be active due to system limitations like the number of data lanes.

The general workings of multiplexers and in particular multiplexers in relation to ultrasound systems and transducer elements are considered known to the skilled person in the art.

Alternatively to a MUX, it is also possible to hard-wire the connections such that the split and processing path for the data of each individual transducer element is fixed. In this way, the various split arrangements as discussed above in relation to the MUX are still possible, but may not be flexibly and/or dynamically adjusted between or during operation. Alternatives to multiplexers which keep the flexibility and dynamic adjustments are for example switch matrices or crossbar switches.

The first part of the analog ultrasound signals (i.e., the part to be processed within the probe) is transmitted from the MUX to a RX ASIC 118. The RX ASIC may, for example, implement a signal amplifier configured to amplify the first part of the analog ultrasound signals.

Amplified analog ultrasound signals may then be transmitted to a plurality of ADCs configured to digitize the signals.

The resulting digital signals may be transmitted to FPGA 116 where the digital signals are collected and digitally beamformed.

Leaving the ultrasound probe through cable 120 are finally digital signals (via route 122) and analog signals (via route 121). The signals are then received by host 130 and processed as discussed with reference to Fig. 1.

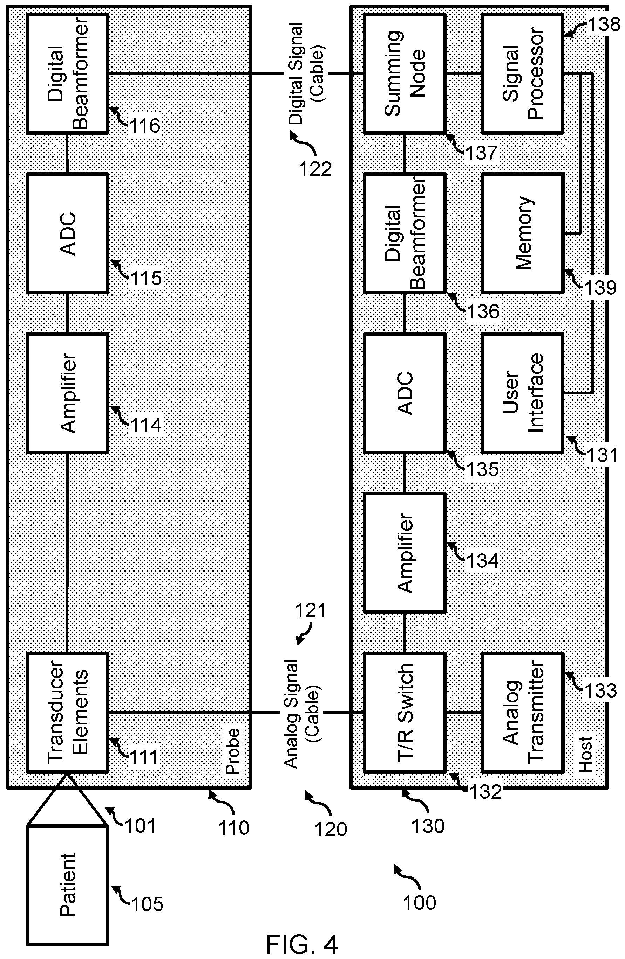

An exemplary digital ultrasound system incorporating the invention as described in relation to Fig. 1 is shown in the schematic of Fig. 4.

The digital ultrasound system of Fig. 4 comprises an ultrasound probe 110, a host 130, and a cable 120 connecting the probe 110 to the host 130.

The ultrasound probe 110 comprises an array of transducer elements 111, a probe amplifier 114, a probe analog-to-digital converter (ADC) 115, and a probe digital beamformer 116.

In some examples, the probe 110 is an ultrasound imaging device including a housing configured for handheld operation by a user. The transducer elements 111 can be configured to obtain ultrasound data while the user grasps the housing of the probe 110 such that the array of transducer elements 111 is positioned adjacent to or in contact with a patient's skin. The probe 110 is configured to obtain ultrasound data (i.e., generate analog ultrasound signals) of anatomy within the patient's body while the probe 110 is positioned in contact with the patient's body. The probe 110 may be an external ultrasound probe, such as a general imaging probe, a patch, or an internal ultrasound probe such as a transesophageal, transthoracic or intravenous probe.

The host 130 further comprises a host transmit/receive switch 132, a host analog transmitter 133, a host amplifier 134, a host analog-to-digital converter (ADC) 135, a host digital beamformer 136, a summing node 137, a signal processor 138, a memory 139 and a user interface (UI) 131. It should be clear from the description herein that the summing node 137 may also be implemented differently. For example, the tasks as performed by the summing node 137 may also be performed by the digital beamformer 136.

It is understood that the components indicated as part of the ultrasound probe and host are not exhaustive, and a probe and/or host may comprise additional components or fewer components. For example, an ultrasound probe may in addition comprise components such as probe-tracking hardware (e.g., accelerometers, inertial measurement units, etc.), a memory, a display, a tactile feedback device, a speaker, heat spreaders, active cooling, etc. For example, the memory and/or UI of the host may be part of a separate system, i.e., located outside of the host. For example, both the probe and the host may comprise communication interfaces comprising any one of transmitters, receivers, transceivers and/or circuitry for transmitting and/or receiving communication signals.

It is understood that the connections (cable 120) as indicated in Fig. 4 are only exemplary and additional communication interfaces may exist within the ultrasound system and with components external to the ultrasound system. For example, the probe and host may in addition to cable 120 also communicate wirelessly. For example, the cable 120 may also comprise power-lanes. For example, the host may communicate with an external memory such as a Picture Archiving Communication System (PACS). For example, the ultrasound system may communicate with a remote server. Communication as defined herein unless otherwise specified may be wired or wireless.

The array of transducer elements 111 may be a single transducer element or a plurality of transducer elements. The array of transducer elements may comprise any number of suitable acoustic elements. For example, the array of transducer elements can include between 1 acoustic element and 10000 acoustic elements, including values such as 2 acoustic elements, 4 acoustic elements, 36 acoustic elements, 64 acoustic elements, 128 acoustic elements, 500 acoustic elements, 812 acoustic elements, 1000 acoustic elements, 3000 acoustic elements, 8000 acoustic elements, and/or other values both larger and smaller. In some instances, the array of transducer elements may include an array of acoustic elements with any number of acoustic elements in any suitable configuration, such as a linear array, a planar array, a curved array, a curvilinear array, a circumferential array, an annular array, a phased array, a matrix array, a one-dimensional (1D) array, a Lx-dimensional array (e.g., a 1.5D array), or a two-dimensional (2D) array. The array of acoustic elements (e.g., one or more rows, one or more columns, and/or one or more orientations) can be uniformly or independently controlled and activated. The array of transducer elements can be configured to obtain one-dimensional, two-dimensional, and/or three-dimensional images of a patient's anatomy. In some embodiments, the array of transducer elements may include a piezoelectric micromachined ultrasound transducer (PMUT), capacitive micromachined ultrasonic transducer (CMUT), single crystal, lead zirconate titanate (PZT), PZT composite, other suitable transducer types, and/or combinations thereof. The array of transducer elements 111 may further be configured to emit ultrasound echoes 101 towards a subject or patient 105 and receive echoes reflected from the subject or patient 105. Responsive to the received echoes the array of transducer elements 111 generates analog ultrasound signals.

A first part of the analog ultrasound signals is transmitted from the array of transducer elements 111 to the probe amplifier 114. The probe amplifier is configured to amplify the first part of the analog ultrasound signals. The probe amplifier may be an analog gain component. The amplified analog ultrasound signal is then transmitted to the probe ADC 115. The probe ADC 115 is configured to convert the first part of the analog ultrasound signals to digital ultrasound signals. This process may also be described as digitizing the analog ultrasound signals. The digitized ultrasound signals are then transmitted to the probe digital beamformer 116 which beamforms the digitized ultrasound signals to yield first digitally beamformed ultrasound signals. After beamforming, the first digitally beamformed ultrasound signals are transmitted from the ultrasound probe 110 via the cable 120 (route 122) to the host 130. It should be understood that multiple ADCs may be implemented within the probe. For example, one ADC for each data lane, i.e., each transducer element to have its data digitally beamformed within the probe. In some examples, the digitized beamformed data may further be compressed before transmission using conventional compression algorithms.

A second part of the analog ultrasound signals is transmitted from the array of transducer elements 111 to the host amplifier 134 via the cable 120 (route 121) and passing through the transmit/receive switch 132. The cable 120 thus transmits both analog and digital signals. The transmit/receive switch 132 is discussed in more detail below. The host amplifier 134 is similar to the probe amplifier 114. The host amplifier is configured to amplify the second part of the analog ultrasound signals. The host amplifier may be an analog gain component. It should be understood that configurations are also possible wherein probe amplifier 114 amplifies the first and second parts of the analog ultrasound signals and the amplified second part of the analog signals are transmitted to the host. Thereby making host amplifier 134 obsolete.

From host amplifier 134 the amplified second part of the analog ultrasound signals are transmitted to the host ADC 135. The host ADC 135 is configured to convert the second part of the analog ultrasound signals to digital ultrasound signals. This process may also be described as digitizing the analog ultrasound signals. The digitized ultrasound signals are then transmitted to the host digital beamformer 136 which beamforms the digitized ultrasound signals to yield second digitally beamformed ultrasound signals. It should be understood that multiple ADCs may be implemented within the host. For example, one ADC for each data lane, i.e., each transducer element to have its data digitally beamformed within the host.

The first digitally beamformed ultrasound signals and second digitally beamformed ultrasound signals are combined in the summing node 137. The summing node 137 essentially sums the first and second digitally beamformed signals to generate the final digitally beamformed ultrasound signal which may be used by signal processor 138 to generate an image.

The summing node 137 and the probe and host digital beamformers 116, 136 together can be said to execute the Delay-And-Sum (DAS) algorithm, where the digital beamformers respectively delay the signals and the summing node performs the summing of the delayed signals. A difference of this configuration compared to typical implementations of the DAS algorithm is that the delayed signals come from different places, i.e., a first part of delayed signals is received from the probe, and a second part of the delayed signals is received from the host. It should be clear to a person skilled in the art that the summing node may thus also be implemented in the host digital beamformer 116. The delay and sum algorithm and its implementation may be similar to the one described with reference to Fig. 2

The signal processor 138 may also be described as a processor circuit, which can include other components in communication with the signal processor 138, such as the memory 139 and the user interface 131. The signal processor 138 can be configured to generate image data from the digitally beamformed ultrasound signals received. The signal processor 138 can apply advanced signal processing and/or image processing techniques to the received signals. An example of image processing includes conducting a pixel level analysis to evaluate whether there is a change in the color of a pixel, which may correspond to an edge of an object (e.g., the edge of an anatomical feature). In some examples, the processor 138 can form a three-dimensional (3D) volume image from the image data. In some embodiments, the processor 138 can perform real-time processing on the image data to provide a streaming video of ultrasound images of the patient 105.

An image generated by signal processor 138 may be stored in memory 139 and/or displayed on user interface 131.

The memory 139 is coupled to the signal processor 138. The memory 139 can be configured to store patient information, measurements, data, or files relating to a patient's medical history, history of procedures performed, anatomical or biological features, characteristics, or medical conditions associated with a patient, computer readable instructions, such as code, software, or other application, as well as any other suitable information or data. The memory 139 may be located within the host 130. There may also be an additional external memory, or an external memory in replacement of memory 139. An external memory may be a cloud-based server or an external storage device, located outside of the host 130 and in communication with the host 130 and/or signal processor 138 of the host via a suitable communication link. Patient information may include measurements, data, files, other forms of medical history, such as but not limited to ultrasound images, ultrasound videos, and/or any imaging information relating to the patient's anatomy. The patient information may include parameters related to an imaging procedure such a probe position and/or orientation.

User interface 131 may further also comprise components enabling interaction with a user or sonographer. For example, user interface 131 may comprise a display such as a monitor configured to display ultrasound images, image videos, and/or any imaging information of the patient 105. For example, the user interface may comprise a touchpad, a touchscreen, a keyboard, a mouse or a microphone enabling the user to provide inputs and/or to control the ultrasound system 100.

The host transmit/receive switch 132 is configured to switch the operation of the array of transducer elements 111 from transmit to receive. In particular, in transmit, electrical pulses are sent from the analog transmitter 133 to the array of transducer elements 111, based on which the transducer elements of the array of transducer elements transmit echoes into the subject or patient 105. The pulses generated by the host analog transmitter may be timed and sent to each transducer element with specific time delays to steer and focus the ultrasound beam to a particular region of interest within the subject or patient 105. The time delays may be calculated by the host digital beamformer 136.

In transmit mode, the host digital beamformer 136 and any other herein disclosed digital beamformer orchestrates the emission of ultrasound waves or echoes by controlling the transducer elements of the array of transducer elements 111. In particular, the host digital beamformer together with the host analog transmitter 133 generates electrical pulses that correspond to a desired ultrasound waveform to be emitted by the array of transducer elements 111. These pulses are timed and sent to each transducer element with specific time delays, wherein the time delays may be used to steer and focus the ultrasound beam to a particular region of interest within the subject or patient 105.

Waves or echoes reflected from within the subject or patient 105 are received by the transducer elements of the array of transducer elements 111 generating the analog ultrasound signals. At this point the host transmit/receive switch may switch the operation from transmit to receive and enable the received analog ultrasound signals to be transmitted and processed as described herein.

In receive mode, the probe digital beamformer 116, the host digital beamformer 136 and any other herein disclosed digital beamformer processes the ultrasound signals reflected from the subject or patient 105 and received by the array of transducer elements. In particular, the digital beamformer applies time delays to the ultrasound signals from each of the transducer elements of the array of transducer elements 111. Thereby, reflected echoes from within the subject or patient 105 may be aligned despite reaching the different transducer elements at different times. The digital beamformer then sums the time-delayed signals to form a focused and coherent beam.

As disclosed above, analog transmitters, beamformers and T/R switches control the transducer elements. It is noteworthy to mention that the number of transducer elements that can be controlled per pulse may be limited by the number of data lanes in, for example, cable 120. For example, a cable 120 comprising 4 data lanes may provide to control 4 transducer elements per pulse. While serializing data is possible control for example 8 transducer elements, this generally comes at a cost of a reduced frame rate.

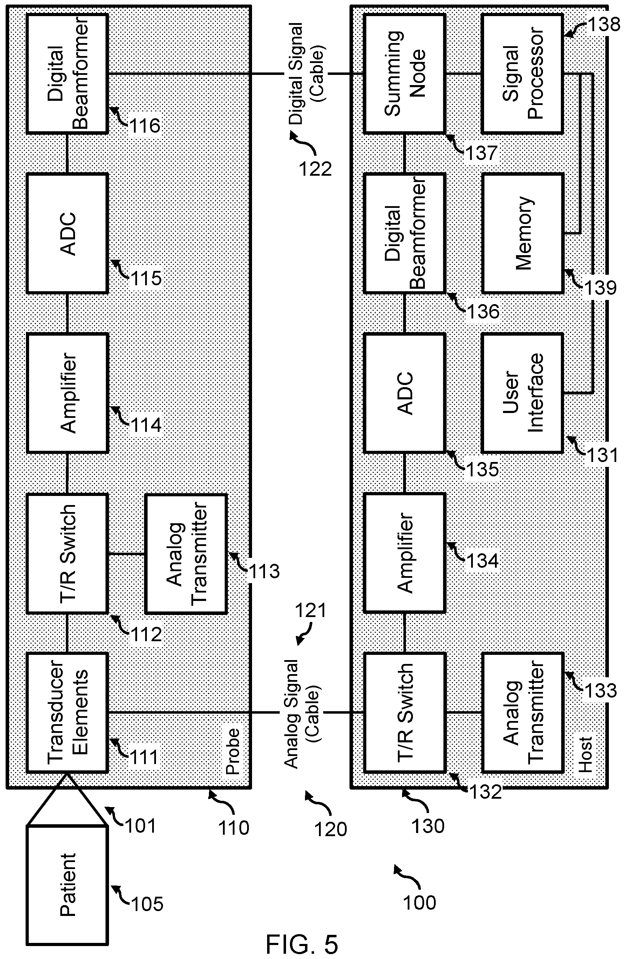

The inventors have further realized that the hybrid approach as described above comprising digital and analog receive signal paths for receive can also be implemented for transmit signal paths. An exemplary digital ultrasound system incorporating also a hybrid transmit approach is shown in Fig. 5.

The digital ultrasound system of Fig. 5 differs from the digital ultrasound system of Fig. 4 in that the ultrasound probe 110 now further comprises a probe transmit/receive switch 112 and a probe analog transmitter 113. The probe transmit/receive switch and the probe analog transmitter are in general configured similar to the host transmit/receive switch and the host analog transmitter. Furthermore, the probe and host transmit/receive switches, the probe and host analog transmitters and the probe and host digital beamformers may operate in parallel. In other words, the following description of how the probe transmit/receive switch 112, the probe analog transmitter 113, and the probe digital beamformer 116 operate is to work in parallel to the earlier description of how the host transmit/receive switch 132, the host analog transmitter 133 and the host digital beamformer 136 operate.

The probe transmit/receive switch 132 is configured to switch the operation of the array of transducer elements 111 from transmit to receive. In particular, in transmit, electrical pulses are sent from the probe analog transmitter 113 to the array of transducer elements 111, based on which the transducer elements transmit echoes into the subject or patient 105. The pulses generated by the probe analog transmitter may be timed and sent to each transducer element with specific time delays to steer and focus the ultrasound beam to a particular region of interest within the subject or patient 105. The time delays may be calculated by the probe digital beamformer 116, 136.

However, unique to this hybrid approach, the probe analog transmitter will only send electrical pulses to a first subset of transducer elements, while the host analog transmitter will only send electrical pulses to a second subset of transducer elements. The selection of subsets of transducer elements may be made with a multiplexer in a similar fashion as described with reference to Fig. 3.

In transmit mode, the probe digital beamformer 116, and any other herein disclosed digital beamformer orchestrates the emission of ultrasound waves or echoes by controlling the transducer elements of the array of transducer elements 111. In particular, the probe digital beamformer together with the probe analog transmitter generates electrical pulses that correspond to a desired ultrasound waveform to be emitted by the array of transducer elements 111. These pulses are timed and sent to each transducer element with specific time delays, wherein the time delays may be used to steer and focus the ultrasound beam to a particular region of interest within the subject or patient 105.

A multiplexer may be connected to the array of transducer elements allowing for a dynamic selection to which transducer elements the electric pulses from the probe analog transmitter and the host analog transmitter are transmitted. In this way, it is possible to select a first subset of transducer elements of the array of transducer elements and a second subset of transducer elements of the array of transducer elements. In particular, any of the following distributions may be considered:
- 50/50 split (first subset/second subset), the probe analog transmitter transmits electrical pulses to a first half of transducer elements, and the host analog transmitter transmits electrical pulses to the remaining (second) half of transducer elements.
- 30/70 split (first subset/second subset), the probe analog transmitter transmits electrical pulses to 30% of transducer elements, and the host analog transmitter transmits electrical pulses to the remaining 70% of transducer elements.
- 70/30 split (first subset/second subset), the probe analog transmitter transmits electrical pulses to 70% of transducer elements, and the host analog transmitter transmits electrical pulses to the remaining 30% of transducer elements.
- 1/99 split (first subset/second subset), the probe analog transmitter transmits electrical pulses to 1% of transducer elements, and the host analog transmitter transmits electrical pulses to the remaining 99% of transducer elements.
- 99/1 split (first subset/second subset), the probe analog transmitter transmits electrical pulses to 99% of transducer elements, and the host analog transmitter transmits electrical pulses to the remaining 1% of transducer elements.

It should be clear that any split is possible, also including splits between the provided examples. A split of 0/100 would eventually yield a digital ultrasound system wherein all transducer elements are controlled from within the host. A split of 100/0 would yield a digital ultrasound system wherein all transducer elements are controlled from within the probe. These two extreme cases are not considered part of the invention. A control of the split may be achieved by an additional controller (not shown) which may control the multiplexer. In an example, the controller is part of the ultrasound probe and is connected to the host via cable 120. In an example, the controller is part of the ultrasound host, and is connected to the multiplexer via cable 120. The controller may determine the split based on an algorithm user input, or based on system requirement.

It is understood that the percentages as indicated above may be percentages of the number of active transducer elements. For example, an array of transducer elements may comprise 1,000 transducer elements, but only 100 may be active due to system limitations like the number of data lanes.

The general workings of multiplexers and in particular multiplexers in relation to ultrasound systems and transducer elements are considered known to the skilled person in the art.

Alternatively to a MUX, it is also possible to hard-wire the connections such that the split and processing path for the data of each individual transducer element is fixed. In this way, the various split arrangement as discussed above in relation to the MUX are still possible, but may not be flexibly and/or dynamically adjusted between or during operation. Alternatives to multiplexers which keep the flexibility and dynamic adjustments are for example switch matrices or crossbar switches.

Waves or echoes reflected from within the subject or patient 105 are received by the transducer elements 111 generating the analog ultrasound signals. At this point the probe and host transmit/receive switches may switch the operation from transmit to receive and enable the received analog ultrasound signals to be transmitted and processed as described herein.

Including a transmit/receive switch and analog transmitter in the probe has similar benefits for the transmit path as described herein for the receive path. While bandwidth requirements for transmit path are typically lower than for receive path, the control of transducer elements 111 may still be limited by the number of data lanes in cable 120. For example, in a conventional ultrasound system, the transmit circuitry takes a digital signal and voltage and converts it to a high voltage analog waveform which is passed to the transducer via analog wires in the cable. In particular, a separate wire per data lane or channel is needed. While the entire transmit circuitry may be placed in the probe, thus overcoming any cable limitations, this has similar power and thermal management issues as discussed herein for the receive signal processing. The inventors have thus realized that it is also possible to have an additional transmit circuitry in the probe and supply the voltage to a probe transmitter (located in the probe) through the cable. Thereby removing the need for all of the individual wires in the cable to transmit the high voltage waveform. In such a case the FPGA as shown in Fig. 3 for example, could be adapted to supply the digital signals. A hybrid transmission as proposed, with a transmitter in the probe and a transmitter in the host, thus benefits the possibility to control more transducer elements without increasing the data lane count in the cable or even the host hardware, thereby also providing a more advanced ultrasound probe that is backwards compatible. In an example with a cable comprising 4 data lanes 4 transducer elements may be controlled per pulse in a conventional ultrasound system. According to the hybrid implementation however, 4 additional transducer elements may be controllable from within the probe directly.

A particularly advantageous implementation of a hybrid transmit circuit involves a set-up where the probe contains lower power consumption transmit circuitry, while the host houses higher power transmit circuitry. The probe's transmit circuitry is configured to drive the outer transducer elements of the array, which require less power. Consequently, the higher power transmit signals from the host are used to drive the central transducer elements, which demand higher voltages and significantly impact the quality of the ultrasound pulse and resulting image. In this way, for example the field of view may be improved at minimal increased power consumption in the probe.

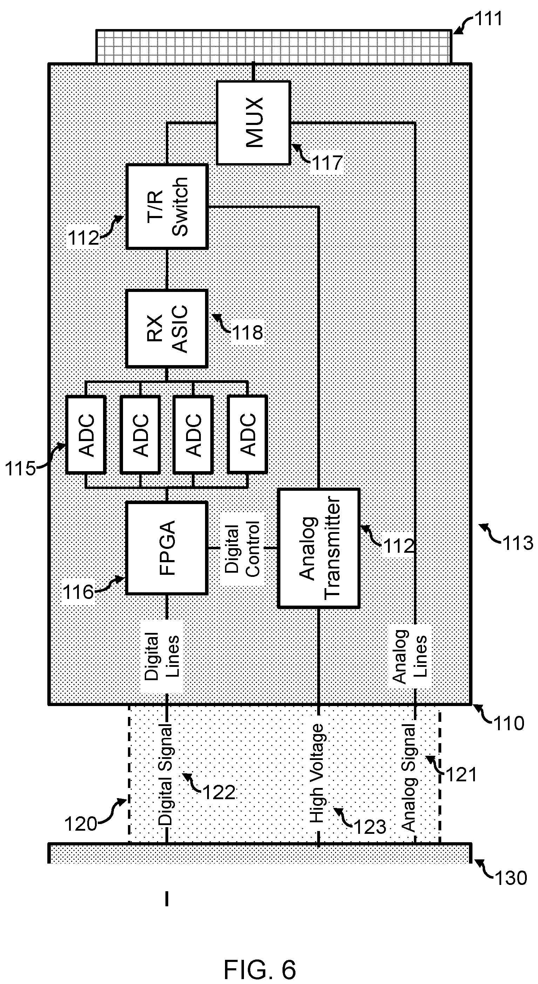

An example of an ultrasound probe incorporating a transmit circuit according to the invention is shown in Fig. 6. The digital receive processing 115, 116 is similar to that described with reference to Fig. 3. In addition to the components of Fig. 3, Fig. 6 also shows a probe transmit/receive switch 112 and a probe analog transmitter 113 within the probe, and a high voltage lane 123 through cable 120.

According to Fig. 6, the probe analog transmitter 113 gets a high voltage 123 from the host 130 (possibly with some on-probe regulators) and digital control signals for the transmit waveform from the FPGA 116. The FPGA 116 may thus in addition to the probe digital beamformer 116 comprise a controller to control the probe analog transmitter 113. The digital control signals may however also be received from the host 130 directly. Based on the received control signals, the probe analog transmitter drives the transducer element with the high voltage causing the transducer elements 111 to vibrate and create an ultrasound signal. While it would be possible to also place a high voltage generator within the probe, this is not convenient due to power and thermal budget constraints. The T/R (transmit/receive) switch 112 prevents that high voltage signals from the transmit circuit drive enter the low-voltage receive circuit during transmit, essentially controlling if a transducer element from the array of transducer elements 111 is currently in transmit or receive mode.

It should be noted that the above-mentioned embodiments illustrate rather than limit the invention, and that those skilled in the art will be able to design many alternative embodiments without departing from the scope of the appended claims. In the claims, if element A is said to be connected to element B, there may be intermediate elements between elements A and B. The word "part" means more than 0% and less than 100%. For example, specific components and arrangements have been presented, but ultrasound systems comprising fewer or more components and/or altering the interactions between the components are also envisioned by the invention. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention may be implemented by means of hardware comprising several distinct elements, and/or by means of a suitably programmed processor. In the device claim enumerating several means, several of these means may be embodied by one and the same item of hardware. Measures recited in mutually different dependent claims may advantageously be used in combination.

## Claims

1. An ultrasound system comprising:
- a probe (110) comprising:
- an array of transducer elements (111);
- a probe analog-to-digital converter (115) connected to the array of transducer elements; and
- a probe digital beamformer (116) connected to the probe analog-to-digital converter;
- a host (130) comprising:
- a host analog-to-digital converter (135); and
- a host digital beamformer (136) connected to the host analog-to-digital converter; and
- a cable (120) connecting the probe to the host;
wherein the ultrasound system is configured to:
transmit (121) analog signals from the array of transducer elements via the cable to the host analog-to-digital converter, and
transmit (122) digital signals from the probe digital beamformer via the cable to the host, and
wherein the host is configured to combine signals from the probe digital beamformer and signals from the host digital beamformer.

2. The ultrasound system of claim 1, wherein the host further comprises a summing node (137) configured to combine signals from the probe digital beamformer and signals from the host digital beamformer.

3. The ultrasound system of any one of the preceding claims, wherein the probe further comprises a multiplexer (117) connected to the array of transducer elements.

4. The ultrasound system of any one of the preceding claims, wherein:
- the probe further comprises:
- an amplifier (118) connected between the array of transducer elements and the probe analog-to-digital converter; and
- the host further comprises:
- an amplifier connected to the host analog-to-digital converter and inserted in a transmit path of the analog signals from the array of transducer elements to the host analog-to-digital converter.

5. The ultrasound system of any of the preceding claims,
wherein the probe comprises Y analog data lanes connecting the array of transducer elements to the probe analog-to-digital converter;
wherein the system comprises X analog data lanes connecting the array of transducer elements to the host analog-to-digital converter; and
wherein X and Y are integers greater than zero.

6. The ultrasound system of claim 5, wherein the cable comprises X analog data lanes and Z digital data lanes, and wherein the Z digital data lanes are configured to transmit digitized and digitally beamformed data from the Y analog data lanes from the probe to the host, wherein Z is an integer greater than zero..

7. The ultrasound system of any one of the preceding claims, wherein:
- the probe further comprises:
- a probe transmit/receive switch (112) inserted between the array of transducer element and the probe analog-to-digital converter; and
- a probe analog transmitter (113) connected to the transmit/receive switch; and
- the host further comprises:
- a host transmit/receive switch (132) inserted in a transmit path of the analog signals from the array of transducer elements to the host analog-to-digital converter; and
- a host analog transmitter (133) connected to the transmit/receive switch.

8. The ultrasound system of any of the preceding claims, wherein:
- the host further comprises:
- a signal processor (138);
- a memory (139); and
- a user interface (131).

9. An ultrasound probe (110) comprising:
- an array of transducer elements (111);
- a probe analog-to-digital converter (115) connected to the array of transducer elements; and
- a probe digital beamformer (116) connected to the probe analog-to-digital converter;
wherein the ultrasound probe is configured to
transmit (121) analog signals from the array of transducer elements via a cable to a host (13), and
transmit (122) digital signals from the probe digital beamformer via the cable to the host.

10. An ultrasound host (110) comprising:
- a host analog-to-digital converter (135); and
- a host digital beamformer (136) connected to the host analog-to-digital converter;
wherein the host is configured to combine signals from a probe digital beamformer and signals from the host digital beamformer.

11. A method for processing ultrasound signals in an ultrasound system, the method comprising:
- inside an ultrasound probe:
- generating analog ultrasound signals at an array of transducer elements;
- digitizing a first part of the analog ultrasound signals; and
- digitally beamforming the digitized first part of the analog ultrasound signals;
- transmitting to a host the digitally beamformed digitized first part of the analog ultrasound signals;
- transmitting to the host a second part of the analog ultrasound signals; and
- inside the host:
- digitizing the second part of the analog ultrasound signals;
- digitally beamforming the digitized second part of the analog ultrasound signals;
- combining the digitally beamformed digitized first part of the analog ultrasound signals and the digitally beamformed digitized second part of the analog ultrasound signals.

12. The method of claim 11 further comprising:
- inside the probe:
- selecting the first part of the analog ultrasound signals and
- selecting the second part of the analog ultrasound signals.

13. The method of claim 11 or 12 further comprising:
- inside the probe:
- amplifying the first part of the analog ultrasound signals; and
- inside the host:
- amplifying the second part of the analog ultrasound signals.

14. The method of any one of claims 11 to 13 further comprising:
- inside de host:
- generating electrical pulses to control a first subset of elements of the array of transducer elements; and
- inside de probe:
- generating electrical pulses to control the array of transducer elements.

15. The method of any one of claims 11 to 14 further comprising:
- inside the host
- generating an ultrasound image; and
- displaying the ultrasound image.
